(19) **Europäisches Patentamt**
**European Patent Office**
**Office européen des brevets**

(11) **EP 4 061 615 B1**

(12) **EUROPÄISCHE PATENTSCHRIFT**

(45) Veröffentlichungstag und Bekanntmachung des Hinweises auf die Patenterteilung:
**01.04.2026  Patentblatt 2026/14**

(21) Anmeldenummer: **20819617.0**

(22) Anmeldetag: **17.11.2020**

(51) Internationale Patentklassifikation (IPC):
**B29C 64/153** (2017.01)    **B29C 64/165** (2017.01)
**B29C 64/393** (2017.01)    **B33Y 10/00** (2015.01)
**B33Y 30/00** (2015.01)    **B33Y 50/02** (2015.01)
**B29C 64/282** (2017.01)    **B22F 10/14** (2021.01)
**B22F 10/368** (2021.01)    **B22F 10/85** (2021.01)
**B22F 12/42** (2021.01)    **B22F 12/45** (2021.01)
**B29C 64/295** (2017.01)

(52) Gemeinsame Patentklassifikation (CPC):
(C-Sets verfügbar)
**B29C 64/153; B22F 10/14; B22F 10/368;**
**B22F 10/85; B22F 12/42; B22F 12/45;**
**B29C 64/165; B29C 64/282; B29C 64/295;**
**B29C 64/393; B33Y 10/00; B33Y 30/00;**
**B33Y 50/02;** B22F 10/28; B22F 12/90;        (Forts.)

(86) Internationale Anmeldenummer:
**PCT/DE2020/000286**

(87) Internationale Veröffentlichungsnummer:
**WO 2021/098899 (27.05.2021 Gazette 2021/21)**

(54) **3D-DRUCKVORRICHTUNG MIT VORTEILHAFTER STRAHLEREINHEIT UND VERFAHREN**

3D PRINTER WITH ADVANTAGEOUS IRRADIATION DEVICE, AND METHOD

IMPRIMANTE 3D AVEC DISPOSITIF D'IRRADIATION AVANTAGEUX ET PROCÉDÉ

(84) Benannte Vertragsstaaten:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorität:  **18.11.2019  DE 102019007982**

(43) Veröffentlichungstag der Anmeldung:
**28.09.2022  Patentblatt 2022/39**

(73) Patentinhaber: **voxeljet AG**
**86316 Friedberg (DE)**

(72) Erfinder:
• **HEYMEL, Bastian**
**86163 Augsburg (DE)**
• **SCHECK, Christoph**
**86152 Augsburg (DE)**
• **WEIGEL, Melanie**
**86152 Augsburg (DE)**

(74) Vertreter: **Hoefer & Partner Patentanwälte mbB**
**Pilgersheimer Straße 20**
**81543 München (DE)**

(56) Entgegenhaltungen:
**WO-A1-2019/143324    US-A1- 2019 176 389**

(52) Gemeinsame Patentklassifikation (CPC): (Forts.)
B22F 2999/00; Y02P 10/25

C-Sets
B22F 2999/00, B22F 10/368, B22F 2203/11,
B22F 12/90, B22F 2203/03;
B22F 2999/00, B22F 12/45, B22F 12/42,
B22F 2203/11

**Beschreibung**

Die Erfindung betrifft eine 3D-Druckvorrichtung mit vorteilhafter Strahlereinheit und Verfahren.

In der europäischen Patentschrift EP 0 431 924 B1 wird ein Verfahren zur Herstellung dreidimensionaler Objekte aus Computerdaten beschrieben. Dabei wird ein Partikelmaterial in einer dünnen Schicht mittels Beschichter (Recoater) auf eine Plattform aufgetragen und dieses selektiv mittels eines Druckkopfes mit einem Bindermaterial bedruckt. Der mit dem Binder bedruckte Partikelbereich verbindet und verfestigt sich unter dem Einfluss des Binders und gegebenenfalls eines zusätzlichen Härters. Anschließend wird die Bauplattform um eine Schichtdicke abgesenkt oder die Beschichter-/Druckkopfeinheit angehoben und eine neue Schicht Partikelmaterial aufgetragen, die ebenfalls, wie oben beschrieben, selektiv bedruckt wird. Diese Schritte werden wiederholt, bis die gewünschte Höhe des Objektes erreicht ist. Aus den bedruckten und verfestigten Bereichen entsteht so ein dreidimensionales Objekt (3D-Bauteil, Formteil). Das Dokument US 2019/176389 A1 offenbart ein 3D-Druckgerät mit einer Anordnung von mehreren Strahlern. Eine thermographische Kamera misst die Temperatur in mindestens einer Zone auf dem Materialbett des 3D-Druckgerätes. Für eine Regelung, wird auf der Grundlage der gemessenen Temperatur die an die Strahler gelieferte Leistung angepasst.

Dieses aus verfestigtem Partikelmaterial hergestellte Objekt ist nach seiner Fertigstellung in losem Partikelmaterial eingebettet und wird anschließend davon befreit. Dies erfolgt beispielsweise mittels eines Saugers. Übrig bleiben danach die gewünschten Objekte, die dann vom Restpulver, z.B. durch Abbürsten, weiter gesäubert werden.

In ähnlicher Weise arbeiten auch andere Pulver-gestützte Rapid-Prototyping-Prozesse, wie z.B. das selektive Lasersintern oder das Elektron-Beam-Sintern bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff dreidimensionale Druckverfahren oder 3D-Druckverfahren zusammengefasst.

Nach dem Stand der Technik werden Infrarot-Flächenheizungen vielfach eingesetzt, um eine Objektoberfläche möglichst gleichmäßig und kontrolliert zu erwärmen. Oft wird dieses Verfahren zur Trocknung von bedruckten Flächen, der Vortemperierung oder dem Thermoformen von Kunststoffen eingesetzt. Die meisten Kunststoffe absorbieren lang- und mittelwellige infrarote elektromagnetische Strahlung zwischen 2 $\mu$m und 10 $\mu$m sehr gut, sodass neben kurzwelligen Strahlerröhren oft auch Keramikstrahler oder Quarz-Strahler-Kassetten zum Einsatz kommen. All diesen Strahler ist gemein, dass sie nach einem gleichen physikalischen Prinzip funktionieren: Ein stromdurchflossener Leiter erhitzt sich aufgrund seines Widerstandes und sendet aufgrund seiner Temperatur ein meist dem Planck'schen Spektrum angenähertes Spektrum elektromagnetischer Strahlung aus. Die zum Einsatz kommenden Leiter sind allesamt sog. Kaltleiter, welche einen positiven Temperaturkoeffizienten aufweisen, weshalb sie auch als PTC-Leiter bekannt sind (Positive Temperature Coefficient). Dem zur Folge steigt ihr ohmscher Widerstand bei Temperaturerhöhung an, was zunächst bei einer angelegten Spannung zu einer höheren Wärmeentwicklung führt. Der spezifische Widerstand $\rho$ wächst zunächst linear mit der Temperatur T in

$$\rho(T) = \rho_0[1 + \alpha_0(T - T_0)]$$

wobei $\rho_0$ der spezifische Widerstand, $\alpha_0$ der Temperaturkoeffizient bei der Referenztemperatur $T_0$ ist.

Eine immer weitere Erhöhung des Widerstandes führt jedoch zu einer Begrenzung des maximalen Stroms, sodass bei einer definierten angelegten Spannung jeweils eine bestimmte Temperatur erreicht wird. Grund hierfür ist, dass der lineare Gültigkeitsbereich der oben beschriebenen Näherung verlassen wird, da allgemein gilt:

$$\rho(T) = \rho_0 \, e^{\alpha(T - T_0)}$$

Diese Temperatur ist also abhängig vom Temperaturkoeffizienten des verwendeten Materials, dem spezifischen Widerstand $\rho(T)$, der Länge des Heizleiters I und dessen Querschnittsfläche A. Mittels Anlegens einer definierten Spannung U kann somit die Heizleistung P eines derartigen Strahlers gesteuert werden, da gilt

$$P = \frac{U^2}{R} \text{ mit } R = \rho(T) \cdot \frac{l}{A}$$

Auch in den Verfahren der additiven Fertigung wird diese Art der Vortemperierung benutzt, um insbesondere bei Sinterverfahren auf dem Baufeld eine Temperatur innerhalb des Sinterfensters des verwendeten Partikelmaterials zu erreichen.

In beispielhaften Ausführungen nach dem Stand der Technik werden mehrere Infrarotstrahler zu einem Aggregat zusammengefasst, um möglichst große Flächen für eine hohe Produktivität bedienen zu können. Um die Objektoberfläche nicht zu überhitzen, kann ein Infrarot-Pyrometer zur Messung der Oberflächentemperatur als Eingangsgröße für eine Heizungsregelung verwendet werden. Meist wird dabei die Leistung aller Infrarotstrahler über die Regelung der Spannung eines einzigen Kanals gesteuert. Dies hat zur Folge, dass alle Strahler um den gleichen Wert in der abgegebenen Wärmeleistung geregelt werden. Dies führt jedoch aus geometrischen Gegebenheiten wie z.B. dem Abstand von Strahleraggregat zur Objektoberfläche zu variierenden Temperaturen auf der bestrahlten Oberfläche. Vor allem an den Rändern des bestrahlten Baufeldes wird dort nicht mehr die optimale Betriebstemperatur für ein 3D-Druckverfahren erreicht.

Weiterhin weisen Keramik- wie auch Quarz-Strahler starke Schwankungen in der abgegebenen Strahlungsintensität auf. Grund hierfür sind neben den großen Fertigungstoleranzen die direkte Abhängigkeit der erreichten Strahlertemperatur von der Heizleiterdicke, -länge und genauen Zusammensetzung. Außerdem weisen insbesondere Keramikstrahler große Variationen in der Dicke der die Heizleiter umhüllenden Keramik auf, was aufgrund der im Vergleich zu Metallen geringen Wärmeleitfähigkeit zu verminderter Aussendung elektromagnetischer Strahlung führt. Die erbrachte Heizleistung wird stattdessen über die elektrische Zuführung der Heizleiter und Ableitung der Wärme an die Montagepunkte des Strahlers abgeführt.

Bei 3D-Druckverfahren und v.a. den Sinterverfahren führt dies zu erheblichen Nachteilen. Da aufgrund der Volumenschwindung beim Erstarren der zuvor gesinterten Formkörper eine Verzerrung auftritt, können in den Randbereichen des Baufeldes keine Formteile hergestellt werden. Somit ist die Produktionseffizient einer solchen Vorrichtung eingeschränkt. Die Temperaturschwankungen sind aber nicht ausschließlich auf die Randbereiche begrenzt. Bei der Herstellung variieren auch die resultierenden mechanischen Kennwerte, sowie die Alterung des zur Anwendung kommenden Partikelmaterials. Mit größerer Baufeldoberfläche verstärken sich diese Effekte.

Ein weiterer Nachteil von Infrarotstrahlern mittleren und längeren Spektrums ist die langsame Ansprechzeit, die von den Herstellern meist in der Größenordnung von Minuten angegeben wird. Somit kann es durchaus über 60 sec. dauern, bis der verwendete Strahler seine Betriebstemperatur erreicht und Infrarotstrahlung des gewünschten Spektrums und Intensität aussendet. Dies stellt in 3D-Druckverfahren einen großen Nachteil dar. Bei 3D- Sinterverfahren bewegen sich die Zeiten für einen Zyklus einer Schichterstellung meist unterhalb der Reaktionszeit der bekannten langwelligen Flächenstrahler. Somit können Temperaturschwankungen während des Druckprozesses mit langwelligen Emittern oft nicht rechtzeitig ausgeglichen werden.

Es ist deshalb eine Aufgabe der vorliegenden Erfindung eine Strahlereinheit zur Verfügung zu stellen, mit der eine gleichmäßige Temperatur auf dem Baufeld erzielt werden kann und/oder die Temperaturregelung schneller erreicht werden kann als in bekannten Druckprozessen, oder zumindest die Nachteile des Standes der Technik vermindert oder ganz vermieden werden.

### Kurze Zusammenfassung der Offenbarung

In einem Aspekt betrifft die Offenbarung Strahlereinheit geeignet für eine 3D-Druckvorrichtung, wobei die Strahlereinheit dadurch gekennzeichnet ist, dass sie ein Array von mehreren Strahlern umfasst, wobei eine Untermenge von Strahlern zu einer Gruppe zusammengefasst ist, wobei jede Gruppe mindestens einen Strahler und mindestens einen Temperatursensor (H304) aufweist, welcher in mindestens einem der Strahler integriert ist, um dessen Eigentemperatur zu messen und der Messwert einem Regelwerk zugeführt wird, um damit die Temperatur der Gruppe der Strahler zu regeln.

In einem weiteren Aspekt betrifft die Offenbarung Verfahren zur Herstellung eines Formteils mittels Partikelmaterialauftrag und selektiver Verfestigung, wobei eine Strahlereinheit wie hierin beschrieben in dem Verfahren verwendet wird, wobei das Verfahren ein 3D-High-Speed-Sintering-Verfahren oder ein 3D-Sinterverfahren oder ein Multi-Jet-Fusion-Verfahren ist.

### Kurze Beschreibung der Figuren

Figur H1 zeigt eine Flächenheizung nach dem Stand der Technik.

Figur H2 zeigt eine Infrarotflächenheizung mit zeitlicher und örtlicher Regelung und die daraus resultierende Oberflächentemperatur.

Figur H3 zeigt eine Strahlereinheit nach der Offenbarung mit beispielhafter eingezeichneter Anordnung von Messinstrumenten.

Figur H4 zeigt eine beispielhafte Strahlereinheit nach der Offenbarung mit einer Anordnung von Gruppen von Infrarotstrahlern, welche in einzelne Heizkreise zusammengefasst sind.

Fig. H5 zeigt beispielhafte schematisch Ausführung von Strahlern in einer Strahlereinheit nach der Offenbarung mit Regelung.

## Ausführliche Beschreibung der Offenbarung

Die der Anmeldung zugrundeliegende Aufgabe wird gelöst durch eine Strahlereinheit nach Anspruch 1 und ein Verfahren nach Anspruch 7. Weitere bevorzugte Ausführungen der Erfindung sind in den Unteransprüchen beschrieben.

Im Folgenden werden einige Begriffe näher definiert. Andernfalls sind für die verwendeten Begriffe die dem Fachmann bekannten Bedeutungen zu verstehen.

Im Sinne der Offenbarung sind "Schichtbauverfahren" bzw. "3D-Druckverfahren" oder "3D-Verfahren" oder "3D-Druck" alle aus dem Stand der Technik bekannten Verfahren, die den Aufbau von Bauteilen in dreidimensionalen Formen ermöglichen und mit den hier im Weiteren beschriebenen Verfahrenskomponenten und Vorrichtungen kompatibel sind.

Unter "Binder-Jetting" im Sinne der Offenbarung ist zu verstehen, dass schichtweise Pulver auf eine Bauplattform aufgebracht wird, jeweils die Querschnitte des Bauteils auf dieser Pulverschicht mit einer oder mehreren Flüssigkeiten bedruckt werden, die Lage der Bauplattform um eine Schichtstärke zur letzten Position geändert wird und diese Schritte solange wiederholt werden, bis das Bauteil fertig ist. Unter Binder-Jetting sind hier auch Schichtbauverfahren zu verstehen, die eine weitere Verfahrens-Komponente wie z.B. eine schichtweise Belichtung z.B. mit IR- oder UV- Strahlung benötigen.

Im "High-Speed-Sintering-Verfahren" im Sinne der Offenbarung wird eine dünne Schicht aus Kunststoffgranulat, wie beispielsweise PA12 oder TPU, auf eine Bauplattform (Baufeld), die vorzugsweise beheizt ist, aufgetragen. Folgend fährt ein Tintenstrahldruckkopf großflächig über die Plattform und benetzt die Bereiche des Baufelds mit Infrarotlicht absorbierender Tinte (IR-Absorber, IR-Akzeptor), an denen der Prototyp entstehen soll. Anschließend wird die Bauplattform mit Infrarot-Licht bestrahlt. Die benetzten Bereiche absorbieren die Hitze wodurch die darunterliegende Pulverschicht versintert. Das unbedruckte Pulver bleibt jedoch lose. Nach dem Sintern senkt sich die Bauplattform um eine Schichtstärke ab. Dieser Vorgang wiederholt sich, bis der Aufbau eines Bauteiles abgeschlossen ist. Anschließend werden die gesinterten Teile im Bauraum kontrolliert abgekühlt, bevor sie entnommen und entpackt werden können. Es kann hierbei auch von Vorteil sein, wenn neben einer Sinterlampe auch eine Overheadlampe oder ein Strahleraggregat verwendet wird, die unterschiedliche Wellenlängenspektren verwenden, wobei sich das Wellenlängenspektrum im Wesentlichen nicht überschneidet. In einer Variation kann zusätzlich zu dem IR-Absorber ein sog. Detailing-Agent eingedruckt werden, die zum Kühlen der damit bedruckten Bereiche dient. Eine Variante des High-Speed-Sintering-Verfahren wird auch als Fusion-Jet-Verfahren bezeichnet, wobei der Druckkopf eine wärmeleitende Flüssigkeit (oft bezeichnet als "Fusing Agent", was dem Absorber entspricht) auf eine Schicht des Partikelmaterials aufgespritzt wird. Sofort nach dem Druck wird eine Hitzequelle (Infrarotlicht) eingesetzt. Die Bereiche, auf welche der "Fusing Agent" aufgetragen wurde, werden stärker erhitzt als das Pulver ohne diese Flüssigkeit. Somit werden die erforderlichen Bereiche zusammengeschmolzen. Ein weiterer Zusatz wird dann verwendet, der auch als sogenannte "Detailing Agent" bezeichnet wird und zum Isolieren genutzt wird. Dieser selektive Eindruck erfolgt um die Bereiche herum, auf welche das "Fusing Agent" oder Absorber" aufgedruckt wurde. Dieser Zusatz soll eine scharfe Kantenbildung fördern. Dieses Ziel soll dadurch erreicht werden, dass die Temperaturunterschiede zwischen bedrucktem und ungenutztem Pulver signifikanter werden. Ein Verfahren mit diesen zwei Druckflüssigkeiten kann auch als Multi-Jet-Fusion-Verfahren bezeichnet werden.

"3D-Formteil", "Formkörper" oder "Bauteil" im Sinne der Offenbarung sind alle mittels des erfindungsgemäßen Verfahrens oder/und der erfindungsgemäßen Vorrichtung hergestellte dreidimensionale Objekte, die eine Formfestigkeit aufweisen.

"Bauraum" ist der geometrische Ort in dem die Partikelmaterialschüttung während des Bauprozesses durch wiederholtes Beschichten mit Partikelmaterial wächst oder durch den die Schüttung bei kontinuierlichen Prinzipien durchläuft. Im Allgemeinen wird der Bauraum durch einen Boden, die Bauplattform, durch Wände und eine offene Deckfläche, die Bauebene, begrenzt. Bei kontinuierlichen Prinzipien existieren meist ein Förderband und begrenzende Seitenwände. Der Bauraum kann auch durch eine sogenannte Jobbox ausgestaltet sein, die eine in die Vorrichtung ein- und ausfahrbare Einheit darstellt und eine Batch-Herstellung erlaubt, wobei eine Jobbox nach Prozessabschluss ausgefahren wird und sofort eine neue Jobbox in die Vorrichtung eingefahren werden kann, sodass das Herstellungsvolumen und somit die Vorrichtungsleistung erhöht wird.

Als "Baumaterial" oder "Partikelmaterial" oder "Pulver" oder "Pulverschüttung" im Sinne der Offenbarung können alle für den 3D-Druck bekannten fließfähigen Materialien verwendet werden, insbesondere in Pulverform, als Schlicker oder als Flüssigkeit. Dies können beispielsweise Sande, Keramikpulver, Glaspulver, und andere Pulver aus anorganischen oder organischen Materialien wie Metallpulver, Kunststoffe, Holzpartikel, Faserwerkstoffe, Cellulosen oder/und Laktosepulver sowie andere Arten von organischen, pulverförmigen Materialien sein. Das Partikelmaterial ist vorzugsweise ein trocken, frei fließendes Pulver, aber auch ein kohäsives schnittfestes Pulver kann verwendet werden. Diese Kohäsivität kann sich auch durch Beimengung eines Bindermaterials oder eines Hilfsmaterials wie z.B. einer Flüssigkeit ergeben. Die Beimengung einer Flüssigkeit kann dazu führen, dass das Partikelmaterial in Form eines Schlickers frei fließfähig ist. Generell können Partikelmaterialien im Sinne der Offenbarung auch als Fluide bezeichnet werden.

In der vorliegenden Anmeldung werden Partikelmaterial und Pulver synonym verwendet.

Der "Partikelmaterialauftrag" ist der Vorgang bei dem eine definierte Schicht aus Pulver erzeugt wird. Dies kann entweder auf der Bauplattform (Baufeld) oder auf einer geneigten Ebene relativ zu einem Förderband bei kontinuierlichen Prinzipen erfolgen. Der Partikelmaterialauftrag wird im Weiteren auch "Beschichtung" oder "Recoaten" genannt.

"Selektiver Flüssigkeitsauftrag" oder "selektiver Binderauftrag" kann im Sinne der Offenbarung nach jedem Partikelmaterialauftrag erfolgen oder je nach den Erfordernissen des Formkörpers und zur Optimierung der Formkörperherstellung auch unregelmäßig, beispielsweise mehrfach bezogen auf einen Partikelmaterialauftrag, erfolgen. Dabei wird ein Schnittbild durch den gewünschten Körper aufgedruckt.

Als "Vorrichtung" zum Durchführen eines Verfahrens gemäß der Offenbarung kann jede bekannte 3D-Druckvorrichtung verwendet werden, die die erforderlichen Bauteile beinhaltet. Übliche Komponenten beinhalten Beschichter, Baufeld, Mittel zum Verfahren des Baufeldes oder anderer Bauteile bei kontinuierlichen Verfahren, Job-Box, Dosiervorrichtungen und Wärme- und Bestrahlungsmittel und andere dem Fachmann bekannte Bauteile, die deshalb hier nicht näher ausgeführt werden.

Das Baumaterial gemäß der Offenbarung wird immer in einer "definierten Schicht" oder "Schichtstärke" aufgebracht, die je nach Baumaterial und Verfahrensbedingungen individuell eingestellt wird. Sie beträgt beispielsweise 0,05 bis 0,5 mm, vorzugsweise 0,06 bis 0,2 mm oder 0,06 bis 0,15 mm, besonders bevorzugt 0,06 bis 0,09 mm.

Ein "Beschichter" oder "Recoater" im Sinne der Offenbarung ist ein Vorrichtungsteil, das Fluid, z.B. Partikelmaterial wie z.B. mineralische oder metallische Materialien oder Kunststoffe, Holz in Form von Partikeln oder Gemische davon, aufnehmen kann und gesteuert auf eine Bauplattform einer 3D-Vorrichtung in Schichten abgibt oder aufträgt. Dabei kann der Beschichter länglich ausgestaltet sein und oberhalb einer Austrittsöffnung befindet sich in einem Vorratsbehälter das Partikelmaterial. Der Beschichter kann aber auch aus einer stehenden Klinge oder einer gegenläufig rotierenden Walze bestehen, die eine bestimmte Pulvermenge jeweils vor der Klinge oder der Walze auf dem Baufeld ausstreichen.

Eine "Beschichterklinge" im Sinne der Offenbarung ist ein im Wesentlichen flaches metallisches oder aus einem anderen geeigneten Material gefertigtes Bauteil, das sich an der Austrittsöffnung des Beschichters befindet und über das das Fluid auf die Bauplattform abgegeben wird und glatt gestrichen wird. Ein Beschichter kann eine oder zwei oder mehrere Beschichterklingen aufweisen. Eine Beschichterklinge kann eine Schwingklinge sein, die Schwingungen im Sinne einer Drehbewegung ausführt, wenn sie angeregt wird. Weiterhin kann diese Schwingung ein- und ausgestellt werden durch ein Mittel zum Erzeugen von Schwingungen. Je nach der Anordnung der Austrittsöffnung ist die Beschichterklinge im Sinne der Offenbarung "im Wesentlichen waagerecht" oder "im Wesentlichen senkrecht" angeordnet.

"Strahleraggregat" im Sinne der Offenbarung ist eine Anordnung von Strahlereinheiten.

"Strahlereinheit" im Sinne der Offenbarung ist eine Einheit, die Licht eines bestimmten Spektrums emittiert und mehrere Strahler umfasst, die jeweils einzeln in ihrer Temperatur einstellbar und gegebenenfalls regelbar sind. "Strahlereinheit" im Sinne der Offenbarung kann auch bezeichnet werden als eine "Overheadlampe" oder "Overheadstrahler" oder "Strahler-Aggregat" oder "Strahlereinheit" oder "Strahlungseinheit" oder "Heizstrahler" oder "Baufeldheizung" im Sinne der Offenbarung ist eine Strahlungsquelle die über dem Baufeld angebracht ist und eine Funktionseinheit bildet. Die Wellenlänge der emittierten elektromagnetischen Strahlung ist stationär und kann in ihrer Strahlungsleistung reguliert werden. Sie ist eine Funktionseinheit, die elektromagnetische Strahlung eines bestimmten Spektrums emittiert. Sie kann einzelne Strahler bzw. eine große Anzahl von Strahlern enthalten, die einzeln oder in Gruppen zusammengefasst gesteuert werden können. Wahlweise überdeckt sie im Wesentlichen das gesamte Baufeld und ist an einer Position in der Vorrichtung angebracht oder sie ist kleiner als das Baufeld und kann verfahrbar über das Baufeld sein.

"Randbereich" im Sinne der Offenbarung ist der Bereich eines Strahleraggregats, der sich am Rand des Strahleraggregats befindet und zum Innenbereich abgegrenzt werden kann. Dabei bilden Randbereich und Innenbereich den Gesamtbereich des Strahleraggregats hinsichtlich seiner Fläche, auf der die Strahlereinheiten angebracht sind.

"Innenbereich" im Sinne der Offenbarung ist der Bereich eines Strahleraggregats, der sich im Inneren des Strahleraggregats befindet und zum Randbereich abgegrenzt werden kann.

"3D-Drucker'" oder "Drucker" im Sinne der Offenbarung bezeichnet das Gerät in dem ein 3D-Druckverfahren stattfinden kann. Ein 3D-Drucker im Sinne der Offenbarung weist ein Auftragsmittel für Baumaterial, z.B. ein Fluid wie ein Partikelmaterial, und eine Verfestigungseinheit, z.B. einen Druckkopf oder ein Energieeintragsmittel wie einen Laser oder eine Wärmelampe, auf. Weitere dem Fachmann bekannte Maschinenkomponenten und im 3D-Druck bekannte Komponenten werden je nach den speziellen Anforderungen im Einzelfall mit den oben erwähnten Maschinenkomponenten kombiniert.

"Baufeld" ist die Ebene oder in erweitertem Sinn der geometrische Ort, auf dem oder in dem eine Partikelmaterialschüttung während des Bauprozesses durch wiederholtes Beschichten mit Partikelmaterial wächst. Häufig wird das Baufeld durch einen Boden, die "Bauplattform", durch Wände und eine offene Deckfläche, die Bauebene, begrenzt.

Der Prozess "Drucken" oder "3D-Drucken" im Sinne der Offenbarung bezeichnet die Zusammenfassung der Vorgänge Materialauftrag, selektives Verfestigen oder auch Bedrucken und Arbeitshöhe verstellen und findet in einem offenen oder geschlossenen Prozessraum statt.

Unter einer "Aufnahmeebene" im Sinne der Offenbarung ist die Ebene zu verstehen, auf die Baumaterial aufgetragen wird. Offenbarungsgemäß ist die Aufnahmeebene immer in einer Raumrichtung durch eine lineare Bewegung frei zugänglich.

"Baufeldwerkzeug" oder "Funktionale Einheit" im Sinne der Offenbarung sind alle Mittel oder Vorrichtungsteile, die für den Fluidauftrag, z.B. Partikelmaterial, und die selektive Verfestigung bei der Herstellung von Formteilen eingesetzt werden. So sind alle Materialauftragsmittel und Schichtbehandlungsmittel auch Baufeldwerkzeuge oder funktionale Einheiten.

"Ausstreichen" oder "Aufbringen" im Sinne der Offenbarung bedeutet jegliche Art und Weise, mit der das Partikelmaterial verteilt wird. Beispielsweise kann an der Startposition einer Beschichtungsfahrt eine größere Pulvermenge vorgelegt werden und durch eine Klinge oder eine rotierende Walze in das Schichtvolumen verteilt oder ausgestrichen werden.

"Beschichter" oder "Recoater"' oder "Materialauftragsmittel" im Sinne der Offenbarung ist die Einheit, mittels derer ein Fluid auf das Baufeld aufgebracht wird. Dieser kann aus einem Fluidvorratsbehälter und einer Fluidauftragseinheit bestehen, wobei gemäß der vorliegenden Erfindung die Fluidauftragseinheit einen Fluidauslass und eine "Rakeleinrichtung" umfasst. Diese Rakeleinrichtung könnte eine Beschichterklinge sein. Es könnte aber auch jede andere erdenkliche geeignete Rakeleinrichtung verwendet werden. Denkbar sind beispielsweise auch rotierende Walzen oder eine Düse. Die Materialzufuhr kann über Vorratsbehälter frei fließend oder mittels Extruderschnecken, Druckbeaufschlagung oder andere Materialfördereinrichtungen erfolgen.

"Warping" bezeichnet das Aufbiegen von bedruckten Schichten aufgrund des zeitlich unterschiedlich auftretenden Schwundes beim Erstarren der gebundenen Partikel. Dies kann zu Schichtfehlern führen, wenn sich Strukturen aufgrund on Warping aus der Baufeldebene erheben und eventuell bei der nächsten Beschichtung vom Beschichter mitgerissen werden.

Der "Druckkopf" oder Mittel zum selektiven Verfestigen im Sinne der Offenbarung setzt sich üblicherweise aus verschiedenen Komponenten zusammen. Unter anderem können dies Druckmodule sein. Die Druckmodule verfügen über eine Vielzahl an Düsen, aus denen der "Binder" in Tröpfchenform auf das Baufeld gesteuert ausgestoßen wird. Die Druckmodule sind relativ zum Druckkopf ausgerichtet. Der Druckkopf ist relativ zur Maschine ausgerichtet. Damit kann die Lage einer Düse dem Maschinenkoordinatensystem zugeordnet werden. Die Ebene in der sich die Düsen befinden wird üblicherweise als Düsenplatte bezeichnet. Ein weiteres Mittel zum selektiven Verfestigen kann auch ein oder mehrere Laser oder andere Strahlungsquellen oder eine Wärmelampe darstellen. Dabei kommen auch Arrays solcher Strahlungsquellen, wie z.B. Laserdiodenarrays in Betracht. Es ist im Sinne der Offenbarung zulässig, dass die Einbringung der Selektivität von der Verfestigungsreaktion getrennt erfolgt. So kann über einen Druckkopf oder eine oder mehrere Laser eine selektive Behandlung der Schicht erfolgen und durch andere Schichtbehandlungsmittel, die Verfestigung gestartet werden. In einer Ausführungsform wird das Partikelmaterial mit einem IR-Absorber bedruckt und anschließend mit einer Infrarotquelle verfestigt.

"Schichtbehandlungsmittel" im Sinne der Offenbarung sind alle Mittel, die geeignet sind, um einen bestimmten Effekt in der Schicht zu erzielen. Dies können die vorgenannten Einheiten wie Druckkopf oder Laser aber auch Wärmequellen in Form von IR-Strahlern oder andere Strahlungsquellen wie z.B. UV-Strahler sein. Denkbar sind auch Mittel zur De- oder Ionisierung der Schicht. Allen Schichtbehandlungsmitteln gemein ist, dass ihre Wirkungszone auf die Schicht linienförmig verteilt ist und dass sie wie die anderen Schichteinheiten wie Druckkopf oder Beschichter über das Baufeld geführt werden müssen, um die gesamte Schicht zu erreichen.

Der "Vorlagebehälter" oder "Vorwärmbehälter" ist im Sinne der Offenbarung ein Behälter, der Partikelmaterial enthält und eine Menge davon nach jeder Schicht oder nach einer beliebigen Anzahl von Schichten an den Beschichter abgibt. Der Vorlagebehälter kann sich dazu vorteilhafterweise über die gesamte Breite eines Beschichters erstrecken. Der Vorlagebehälter verfügt am unteren Ende über einen Verschluss, der das Partikelmaterial am ungewollten Austreten hindert. Der Verschluss kann z.B. als Zellradschleuse, als einfacher Schieber oder andere geeignete Mechanismen nach dem Stand der Technik ausgebildet sein. Ein Vorlagebehälter im Sinne der Offenbarung kann Partikelmaterial für mehr als eine Schicht enthalten. Vorzugsweise enthält der Vorlagebehälter sogar Partikelmaterial für die Ausbringung von 20 oder mehr Schichten. Das Partikelmaterial kommt entweder über eine Förderstrecke aus einem größeren Vorrat in Form eines Silos oder eines Big-Bags oder wird händisch in den Behälter gefüllt. Die Füllung erfolgt vorzugsweise durch eine Öffnung am oberen Rand. Dadurch kann eine Förderung des Partikelmaterials im Vorlagebehälter durch die Schwerkraft erfolgen und es sind damit keine weiteren Fördereinrichtungen im Behälter notwendig. Eventuell verfügt der Vorlagebehälter auch über Rüttelmechanismen, die eine Brückenbildung des Partikelmaterials im Behälter verhindern. Der Vorlagebehälter weist einen Bereich auf, der das Partikelmaterial aufnimmt, der sich üblicherweise zwischen den Seitenwänden und dem Verschluss befindet. Nach der Offenbarung ist es vorteilhaft, wenn in dem Bereich, der das Partikelmaterial aufnimmt, ein Heizmittel angeordnet ist. Das Heizmittel ist so angeordnet, dass das Partikelmaterial das Heizmittel umfließt und somit die Aufheizung des Partikelmaterials verbessert wird. Der Vorlagebehälter kann stationär angeordnet sein, wobei dieser dann z.B. über der Halteposition des Beschichters angeordnet sein kann oder über dem Baufeld. Die Nachfüllung kann dann je nach Bedarf oder/und Steuerung der Volumenmenge mit vortemperiertem Partikelmaterial durch ein Verfahren des Beschichters an bzw. unterhalb des Vorlagebehälters erfolgen. Der Vorlagebehälter kann aber auch mit dem Beschichter lösbar oder nicht-lösbar verbunden sein. Es kann auch vorteilhaft sein aus Konstruktions- oder/und Kostengründen, dass der Beschichter nicht beheizbar ist. Der Beschichter kann dann über eine passive Isolierung verfügen. Der Beschichter kann aber auch überhaupt nicht beheizt und auch nicht mit einer Isolierung versehen sein, wenn das vorgeheizte Partikelmaterial in einem Volumen an den Beschichter abgegeben wird, das im Wesentlichen einem Schichtvolumen entspricht oder dem 1,2- bis 2-Fachen davon und es so praktisch ohne Verweildauer im Beschichter und damit im Wesentlichen ohne Wärmeverlust auf das Baufeld aufgetragen werden kann.

## Ausführliche Beschreibung der Offenbarung

Im Folgenden werden die verschiedenen Aspekte und vorteilhafte Ausgestaltungen der Offenbarung näher beschrieben.

Die der Anmeldung zugrunde liegende Aufgabe wird gelöst durch-eine Strahlereinheit nach Anspruch 1.

Die der Anmeldung zugrunde liegende Aufgabe wird weiterhin gelöst durch ein Verfahren nach Anspruch 7.

Es hat sich gezeigt, dass eine Temperaturregelung an der Strahlereinheit selbst durch einen Temperaturregelkreis im Gegensatz zu einer Leistungskontrolle über die Einstellung der Watt-Leistung eine bessere Einstellung der Baufeldtemperatur ermöglicht und so auch eine schnellere Anpassung von Temperaturabweichungen auf dem Baufeld erzielt werden kann. Es wird so auch vorteilhafter Weise eine gleichmäßigere Temperaturverteilung auf dem Baufeld und insbesondere an den Randbereichen des Baufeldes erreicht.

Die Temperaturregelung ist weiterhin in vorteilhafter Weise unabhängig von Schwankungen der Spannungszuführung, Fertigungs- und Montagetoleranzen und weiteren äußeren Einflüssen wie Umgebungstemperatur, Luftfeuchtigkeit und konvektive Wärmeleitung.

Auch werden hiermit Rückkopplungseffekte, z.B. hervor gerufen durch Absorption von Sekundärstrahlung während des Schichtaufbaus minimiert.

Bevorzugten Ausführungsformen werden in den Unteransprüchen offenbart.

Eine bevorzugte Strahlereinheit nach der Offenbarung ist dadurch gekennzeichnet, dass an jedem Strahler oder jeder Gruppe von Strahlern eine Zieltemperatur eingestellt ist, mit der Maßgabe, dass nicht die Leistung (Watt) des Strahlers als Zielparameter eingestellt ist.

Eine bevorzugtes Strahlereinheit nach der Offenbarung ist dadurch gekennzeichnet, dass im Wesentlichen jeder Strahler oder jeder Gruppe von Strahlern im Strahleraggregat auf eine andere Zieltemperatur eingestellt ist.

Eine bevorzugtes Strahlereinheit nach der Offenbarung ist dadurch gekennzeichnet, dass die Strahlereinheit einen Regelkreis zur Zieltemperatureinstellung jedes Strahlers oder/und zur Zieltemperatureinstellung auf dem Baufeld aufweist.

Eine bevorzugtes Strahlereinheit nach der Offenbarung ist dadurch gekennzeichnet, dass die Strahlereinheit einen Algorithmus verwendet, um eine Zieltemperatur auf dem Baufeld mittels Zieltemperatureinstellung in der Strahlereinheit zu erreichen oder/und wobei die Zieltemperatureinstellung mittels Definition von Strahlern zu einer Untermenge von Strahlern zu einer Gruppe erreicht wird.

Eine bevorzugtes Strahlereinheit nach der Offenbarung ist dadurch gekennzeichnet, dass die Strahlereinheit mindestens eine Thermographie-Kamera, die auf das Baufeld gerichtet ist, und/oder mindestens einen Infrarot-Pyrometer und/oder mindestens einen Temperaturfühler umfasst, wobei der Temperaturfühler vorzugsweise ein Thermoelement oder Widerstandsthermometer ist.

Eine bevorzugtes Strahlereinheit nach der Offenbarung ist dadurch gekennzeichnet, dass die Thermographiekamera für lokale Messaufnahmen und das Infrarot-Pyrometer der Kalibrierung der absoluten Temperaturwerte dient.

In einem weiteren Aspekt betrifft die Offenbarung eine 3D-Druckvorrichtung, wobei eine Zieltemperatur auf dem Baufeld durch eine Zieltemperatureinstellung in der Strahlereinheit in jedem Strahler oder jeder Gruppe von Strahlern einstellbar ist.

In einem weiteren Aspekt betrifft die Offenbarung ein Verfahren zur Herstellung eines Formteils nach Anspruch 7.

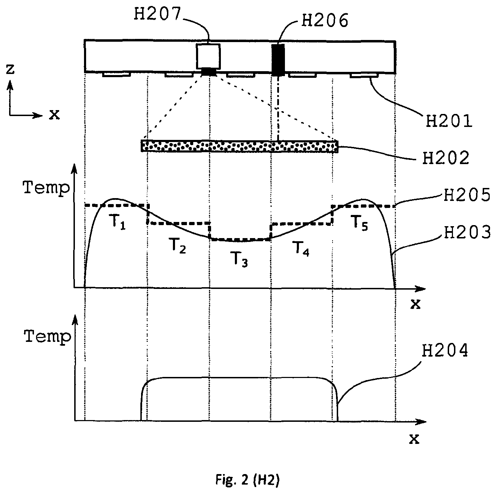

Ein bevorzugtes Verfahren nach der Offenbarung ist dadurch gekennzeichnet, dass die Zieltemperatur in einem Querschnitt der Strahlereinheit der in Fig. 2 gezeigten Verteilung entspricht.

Ein bevorzugtes Verfahren nach der Offenbarung ist dadurch gekennzeichnet, dass das Verfahren ein 3D-High-Speed-Sintering-Verfahren oder ein 3D-Sinterverfahren ist.

Ein bevorzugtes Verfahren nach der Offenbarung ist dadurch gekennzeichnet, dass sich die Anordnung und/oder die Zieltemperatur der Strahler aus den physikalischen Gesetzen zur Wärmeübertragung und Berechnungen nach der Finite Elemente Methode unter Entwicklung eines eigenen Algorithmus ergibt.

In der Vorrichtung und dem Verfahren nach der Offenbarung kann es weiterhin bevorzugt sein, wenn ein Vorlagebehälter in der Vorrichtung umfasst ist bzw. verwendet wird.

**Weitere beispielhafte Darstellung der Offenbarung**

Verschiedene Aspekte der Offenbarung werden im Folgenden beispielhaft beschrieben, ohne dass diese beschränkend verstanden werden sollen.

Es wird versucht, die oben beschriebenen Nachteile von bekannten Strahlereinheiten und deren Einsatz bei 3D-Druckverfahren auszugleichen und dem dadurch Rechnung zu tragen, indem zu erstellende Formteile in bestimmter Anordnung im Bauraum platziert werden. Außerdem können bestimmte Geometrien durch den Sinterprozess nur schwer oder nur in bestimmter räumlicher Ausrichtung erstellt werden. Dies steht einer automatisierten, kostenreduzierten Fertigung entgegen und ist einer der Gründe für die vergleichsweise hohen Kosten für gesinterte Formkörper.

Um diese Einschränkungen zu umgehen, wird zunächst versucht mittels unterschiedlicher Strahlerleistungen die inhomogene Temperaturverteilung auf der Objektoberfläche H202 zu kompensieren, wie in Fig. 2 dargestellt. Dabei werden einzelne Infrarotstrahler H201 an den Randbereichen des Strahleraggregats zu eigenen Heizkreisen zusammengefasst, die mit einer höheren Leistung im Vergleich zu denen in der Mitte des Aggregats betrieben werden. In diesem Beispiel sind 5 verschiedene Oberflächentemperaturen H205 der Infrarotflächenstrahler H201 skizziert. Die Oberflächentemperaturen werden so gut als möglich der zuvor aus geometrischen und physikalischen Überlegungen errechneten ortsabhängigen Heizkurve H205 angenähert. Das Resultat ist ein relativ homogenes Temperaturfeld H204 auf der Objektoberfläche. Für eine Regelung der resultierenden Temperaturen wird wiederum ein Infrarot-Pyrometer H206 eingesetzt, diesmal jedoch gekoppelt mit einer Thermographie-Kamera H207, welche im Stande ist die Temperaturverteilung der Objektoberfläche ortsaufgelöst aufzunehmen.

Die Messdaten der Thermographie-Kamera können nun dazu verwendet werden, die einzelnen Flächenstrahler gezielt zu steuern und somit Ungleichmäßigkeit in der örtlichen Konstanz der Objektoberflächentemperaturen auszugleichen, was insbesondere die Randbereiche dieser miteinschließt. Jedem Einzelstrahler ist dabei ein hiermit korrespondierendes Flächenelement auf der Objektoberfläche zugeordnet. Das Infrarot-Pyrometer dient in einem Ausführungsbeispiel der Absolutwert-Korrektur, garantiert somit eine Verhinderung von Temperaturdrift in den Messungen der Thermographie-Kamera und sorgt für zeitliche Konstanz des Temperaturfeldes.

Wie im in Fig. H3 dargestellten Feld (H301) von Einzelstrahlern (H303) wird durch die Regelung mittels Thermographie-Kamera (H302) und Infrarot-Pyrometer (H305) nicht einfach die Leistung an den einzelnen Heizelementen justiert. Vielmehr wird mittels eines Temperatursensors (H304), welcher in die einzelnen Heizelemente integriert ist, deren Eigentemperatur gemessen und als Messwert einem Regelwerk zugeführt. Wird das Regelwerk als PID-Regler ausgeführt, kann mit dessen Hilfe die Zeit zum Erreichen des Temperatur-Sollwertes der Strahler minimiert werden. Voraussetzung hierfür ist, dass der Heizleistung der einzelnen Heizelemente genügend Reserve gegeben wurde. Zum Beispiel kann ein Strahler verwendet werden, dessen maximale Leistung bei 650 Watt liegt, wobei die zu erreichende Strahlertemperatur im Gleichgewichtszustand aber bereits bei 200 Watt erreicht wird. Dem Regler ist es dann bis zum Erreichen der Solltemperatur möglich, die gestellte Leistung zu maximieren, um sie bei Erreichen dieser innerhalb kurzer Zeit wieder auf den eingeschwungenen Zustand zu reduzieren. Die Reaktionszeit lässt sich somit auf deutlich unter 20 sec. absenken, was innerhalb der Schichtzykluszeit eines Sinter-Druckers liegt. Somit ist es dem System nun möglich, rechtzeitig auf Temperaturschwankungen zu reagieren.

Des Weiteren lässt sich durch diese Methode die langwierige Aufheizzeit bis zum Erreichen des eingeschwungenen Zustandes stark auf bis ein Viertel verkürzen.

In einer Beispielhaften Anordnung eines Strahler-Aggregats befinden sich jeweils 4 Thermographie-Kameras H302 und Infrarot-Pyrometer H305, um kontaktlose Objektoberflächen-Temperaturmessungen mit möglichst kleinem Winkelfehler zu ermöglichen und den Abstand zwischen Aggregat und Objektoberfläche klein zu halten. Ein kleiner Abstand hat eine höhere Energieeffizienz zur Folge. Bei H304 handelt es sich um herkömmliche Temperaturfühler, z.B. Thermoelemente oder Widerstandsthermometer, welche die Oberflächentemperatur der Infrarotstrahler, und aufgrund des Stefan-Boltzmann-Gesetzes deshalb die abgestrahlte Leistung, kontinuierlich messen und zusammen mit den anderen beiden Messvorrichtungen die Eingabewerte für die Sollwertregelung geben. Die Solltemperatur der einzelnen Heizelemente wird über folgenden Zusammenhang berechnet:

$$\dot{Q}_{12} = C_{12} \cdot (T_1{}^4 - T_2{}^4)$$

$$C_{12} = \varepsilon_1 \cdot \varepsilon_2 \cdot F_{12}$$

Der Wärmestrom $\dot{Q}_{12}$ zwischen Strahler und korrespondierendem Baufeldelement mit Temperatur $T_1$ soll durch Anpassung dessen Temperatur $T_2$ minimiert werden. Hierbei sind neben den Emissionsfaktoren von Strahler $\varepsilon_2$ und Partikelmaterial auf dem Baufeld $\varepsilon_1$ vor allem die sog. Ansichtsfaktoren $F_{12}$ und $F_{21}$ ausschlaggebend. Die Ansichtsfaktoren beschreiben die Orientierung beider Oberflächen zueinander, wobei $F_{21}$ den Strahlungsfluss von Strahler zu Baufeld und $F_{12}$ den umgekehrten Weg bezeichnet. Die Lösungsfindung der Solltemperaturen für ein jedes Heizelement, kann durch ein Lösen des Systems von sich ergebenden Differentialgleichungen mittels der Finiten Elemente Methode erreicht werden.

Soll eine größere Oberfläche bedient werden, lassen sich problemlos mehrere Strahlerfelder staffeln, d.h. kombiniert anordnen. Durch Überlappung der Messbereiche von Thermographie-Kameras und Infrarot-Pyrometern lassen sich weiterhin Kalibrierdaten generieren und somit die Messgenauigkeit der verwendeten Instrumente verbessern, indem die gewonnenen Messdaten miteinander verglichen werden. Somit sind nahezu beliebige Baufeldgeometrien und -größen möglich, ohne einen erneuten aufwendigen und kostenintensiven Konstruktionsschritt zu enthalten.

Aufgrund von Symmetrieüberlegungen lassen sich in einer Ausführungsform nach der Offenbarung wie in Fig. H4 dargestellt Strahlergruppen des Strahleraggregats (H400) bilden, (H401) bis (H406), welche jeweils gemeinsam geregelt werden können. Somit können ohne größere Einschränkungen in der Temperaturkonstanz auf der Objektoberfläche Aufwand und Kosten eingespart werden und der Regelalgorithmus gestaltet sich einfacher. So bietet es sich an, Strahler (H401) an den Unstetigkeiten 2. Ordnung, den Ecken der zu beheizenden Objektoberfläche gesondert zu betrachten, da dort aufgrund der kühleren Umgebung ein stärkerer Wärmestrom zu erwarten ist. Ähnlich verhält es sich bei Betrachtung der Kanten (H405) und (H406) der zu beheizenden Objektoberfläche, welche getrennt sind, um Differenzen zwischen Vorder- und Rückseite der Vorrichtung auszugleichen. (H203) und (H204) übernehmen dies für den Innenbereich. Das Zentrum größter Symmetrie in der Mitte des Aggregats wird dann über (H402) bedient. Das Zusammenfassen mehrerer Einzelstrahler kann sich außerdem wiederum vorteilhaft auf die Messgenauigkeit auswirken. So können z.B. mehrere Temperatursensoren innerhalb einer Gruppe ausgewertet werden, um durch Mittelwertbildung Fertigungstoleranzen zu nivellieren.

Weiterhin zeigt Fig. H5 schematisch eine Ausführung einer entsprechenden Regelung, wie sie in den Ausführungsbeispielen in Fig. H3 und Fig. H4 angewendet werden kann. Mittels Thermographie-Kamera werden Variationen in der Temperaturverteilung auf der Objektoberfläche gemessen. Ein Flächenelement wird ebenfalls durch ein Infrarot-Pyrometer abgedeckt. Die mit der Thermographie-Kamera gemessenen Temperaturen dieses Flächenelements werden gemittelt und mit dem Messwert des Pyrometers verglichen. Die Kamera wird anschließend soweit nachjustiert, bis sich diese beiden Werte gleichen. Anschließend wird der erhaltene Korrekturfaktor auf die restlichen Messdaten angewandt. Die korrigierten Daten werden nun über einen Algorithmus an die Stellwerke der Heizelemente überführt. Der Algorithmus hat die Aufgabe jedem Einzelstrahler ein dazu korrespondierendes Flächenelement zuzuweisen. Außerdem wird hier der Überlapp der Flächenelemente berücksichtigt. Dies hat den Hintergrund, dass der Einzelstrahler aufgrund des sich ausgebildeten Strahlungskegels auch benachbarte Flächenelemente mit erreicht. Außerdem muss der Algorithmus die geometrische Anordnung der Einzelstrahler mit berücksichtigen, denn benachbarte Strahler beeinflussen sich gegenseitig. Dies könnte im ungünstigsten Fall zu einer ungewollten Oszillation der Leistungen der einzelnen Heizkreise über die Zeit führen.

Durch den Algorithmus werden Solltemperaturen der einzelnen Heizelemente errechnet und an die Regler eines jeden Heizkreises weitergegeben. Die Regler, beispielhaft als herkömmliche PID-Regler ausgeführt, vergleichen Temperatur-Soll- und Istwert und sorgen dafür, die vorgegebene Solltemperatur der Infrarotstrahler in möglichst geringer Zeit und Abweichung zu erreichen, indem sie die elektrische Leistung, die diesen Strahlern zugeführt wird, steuern.

Anschließend wird die Temperaturverteilung erneut gemessen und der Prozess beginnt von neuem. Bevorzugt findet ein Zykluslauf der gesamten Regelung zu einem definierten Zeitpunkt pro Schichtzyklus des Aufbauprozesses statt, sodass die Messung nicht durch die Aggregate Sintervorrichtung, Beschichter und Druckkopf behindert wird, die sich währenddessen über die Baufeldoberfläche bewegen.

Fig. H5 zeigt schematisch eine Ausführung einer Regelung nach der Offenbarung, wobei mittels Thermographie-Kamera Variationen in der Temperaturverteilung auf der Objektoberfläche gemessen und zeitliche Schwankungen mittels Infrarot-Pyrometer ausgeglichen werden sowie der absolute Temperaturwert kalibriert werden kann. Die erhaltenen Messdaten werden einem Algorithmus zugeführt, der daraus die Temperatur-Sollwerte eines jeden Infrarot-Strahlers errechnet und sie an die PID-Regler weiter gibt.

Weiterhin zeigt Figur H5 schematisch eine Ausführung einer entsprechenden Regelung, wie sie in den Ausführungsbeispielen in Fig. H3 und Fig. **H4** angewendet werden kann.

Der Solver-Algorithmus, welchem die Aufgabe zukommt, die Solltemperaturen der einzelnen Heizelemente zu berechnen, erledigt dies auf Grundlage von physikalischen Zusammenhängen, welche den Wärmestrom beschreiben. Eine wichtige Komponente stellen hierbei die Ansichtsfaktoren $F_{ij}$ dar.

Die Ansichtsfaktoren beschreiben die Orientierung beider Oberflächen zueinander, wobei $F_{21}$ den Strahlungsfluss von Strahler zu Baufeld und $F_{12}$ den umgekehrten Weg bezeichnet. Die Ansichtsfaktoren zwei sich gegenüberliegender, endlicher Flächen haben dabei die allgemeine Form

$$F_{ij} = \frac{1}{A_i} \int\limits_{A_i} \int\limits_{A_j} \frac{\cos\theta_i \cos\theta_j}{\pi R_{ij}^2} \, dA_i \, dA_j$$

Der Ansichtsfaktor $F_{ij}$ ist somit definiert durch die endlichen sich gegenüberstehenden Flächen $A_i$ und $A_j$ von jeweils Strahler und Baufeld, sowie deren jeweiligen Winkeln zu den Einheitsnormalen auf diese $\cos \Theta_i$ und $\cos \Theta_j$, und dem Abstand der Flächen zueinander $R_{ij}$.

Dabei kann eine Strahlereinheit nach der Offenbarung so konstruiert sein, dass ein Strahler nicht nur ein Flächenelement, d.h. einen Bereich (Teilbereich) des Baufeldes, beleuchtet, sondern das gesamte Baufeld. Dabei wird auf einen Kernbereich (Flächenelement) die Hauptstrahlung projiziert und weiterhin trifft um diesen Kernbereich auch Strahlung auf. Ebenso tauscht jedes Flächenelement des gesamten Baufelds Strahlung mit dem Strahler bzw. dem Strahleraggregat aus. Dies gilt nun für jeden einzelnen Strahler der Strahlereinheit. Die geometrische Anordnung von Strahlern, wie z.B. deren Größe, Abstand zum Baufeld und Abstand zueinander wird ebenso, wie die Geometrie des zu beheizenden Baufeldes, also dessen Orientierung, Länge und Breite mittels der erwähnten Ansichtsfaktoren beschrieben.

Da bekannt ist, welche Materialien zum Einsatz kommen, kann deren zumeist temperaturabhängiger Emissionsgrad bei der Konstruktion und im Betrieb, d.h. beim Durchführen eines 3D-Druckverfahrens, miteinbezogen werden.

Zusätzlich werden Wärmeströme aufgrund von Konvektion und Wärmeleitung in Partikelmaterial und Strahleraggregat, welche wiederum temperaturabhängig sind, in die Berechnung bei der Konstruktion und im Betrieb eines Strahleraggregates nach der Offenbarung miteinbezogen. Dies gilt insbesondere für die Randbereiche von Baufeld und Strahleraggregat, da hier aufgrund der Diskontinuität verstärkt Konvektion und Wärmeleitung auftritt. Weiterhin kann eine zusätzliche Wärmeleitung aufgrund der Anbringung des Strahleraggregats und der zur Abschirmung zum Maschinengehäuse benötigten Kühlmittel berücksichtigt werden.

Somit ergibt sich ein komplexer Satz an abhängigen, inhomogenen Differentialgleichungen. Aufgabe eines Solver-Algorithmus ist es nun, anhand der Eingabe der gemessenen Temperaturwerte, dieses Gleichungssystem über Bestimmung der Eigenwerte der den Heizstrahlern zugeordneten Temperaturen dahingehend zu lösen, dass der berechnete Gesamtwärmestrom $\dot{Q}_{ges}$ zwischen Strahlern und Baufeld unter Miteinbeziehung der Baufeld-Solltemperatur minimal wird.

Die Lösungsfindung dieser Solltemperaturen (T_n,soll) für einen jeden Strahler n kann durch ein Lösen des Gleichungssystems mittels eines Solvers unter Anwendung der Finiten Elemente Methode erreicht werden. Ein solcher Solver kann die Berechnungen aufgrund von Fortschritten in der Rechenleistung moderner Rechnersysteme und Optimierungen in den einzelnen Rechenschritten innerhalb der Zeit eines Schichtzyklus erledigen.

Die hiermit berechneten Sollwerte für die einzelnen Strahler werden nun an einen Satz aus Reglern übergeben, denen die Aufgabe zukommt, diese Solltemperaturen in möglichst kurzer Zeit an den Strahlern einzustellen.

Die Regler, beispielhaft als herkömmliche PID-Regler ausgeführt, vergleichen Temperatur-Soll- und Istwert (T_n,ist) und sorgen dafür, die vorgegebene Solltemperatur der Strahler (z.B. Infrarotstrahler) in möglichst kurzer Zeit und geringer Abweichung zu erreichen, indem sie die elektrische Leistung (P_n), die diesen Strahlern zugeführt wird über die Variation der angelegten mittleren Spannung, steuern.

Ist die Solltemperatur an den Strahlern erreicht, wird anschließend die Temperaturverteilung erneut gemessen. Durch Vergleich von Messung zu den errechneten Werten, werden nun Korrekturfaktoren abgeleitet, welche in zukünftige Berechnungen mit einfließen. Somit ist das System im Stande, auf Fertigungstoleranzen im Aufbau und Störungen, wie z.B. einer Änderung der Umgebungsbedingung oder Änderungen in der Zusammensetzung des Partikelmaterials, beispielsweise aufgrund von Alterung von dem Druckprozess zugeführten Anteilen an Recyclingmaterial, dynamisch zu reagieren. Auch Alterungserscheinungen der Vorrichtung selbst werden automatisch auskorrigiert. Ein Einfahren des 3D-Druckers über mehrere Wochen wie nach dem Stand der Technik üblich wird ebenfalls vermieden.

Bevorzugt findet ein Zykluslauf der gesamten Regelung zu einem definierten Zeitpunkt pro Schichtzyklus des Aufbauprozesses statt, sodass die Messung nicht durch die Aggregate Sintervorrichtung, Beschichter und Druckkopf, die sich währenddessen über die Baufeldoberfläche bewegen, behindert wird. Änderungen der Wechselwirkung mit dem Strahlungsfeld oder Änderungen in der Temperatur der bei der Schichterstellung zur Anwendung kommenden Aggregate wirkt sich nicht mehr aus, da die Abschattung des Baufeldes dieser zeitlich und örtlich ausgeblendet werden kann.

Somit ergibt sich der Vorteil, dass anders als nach dem Stand der Technik, kein Justieren oder/und Einmessen der Vorrichtung mehr von Nöten ist. Des Weiteren ist der 3D-Drucker auch unter schwankenden Umgebungsbedingungen stabil betriebsfähig, was somit auch den Betrieb in Gebieten mit höherer oder niedrigerer Umgebungstemperatur miteinschließt. Dies führt zu einem Kostenvorteil, da hierdurch Kosten für z.B. eine Klimatisierung der Umgebung entfallen.

Beim Druckprozess wird durch den Sintervorgang der mit IR-Akzeptor (IR-Absorber) benetzten Partikelmaterial-Flächen, die dem Schnittbild eines zu erzeugenden Formkörpers entsprechen, mittels eines Sinteraggregats zusätzliche Energie eingebracht, was dort zu einer Temperaturerhöhung führt. Weiterhin verändern sich durch die bereits erzeugten Formkörperteile physikalische Größen wie die Wärmeleitfähigkeit im Partikelmaterial oder auch der Emissionsgrad der bedruckten Oberfläche. Dies führt in Vorrichtungen nach dem Stand der Technik immer wieder zu Abbrüchen des Druckprozesses aufgrund unbeherrschbarer Prozesszustände bis hin zu Beschädigungen der Maschine.

Im vorliegenden Fall ist die Lage der Bauteile im Bauraum bekannt. So liegen die Schnittbild-Daten für die Aufbringung des IR-Akzeptors bereits vor und, können dem Solver-Algorithmus zugeführt und von diesem berücksichtigt werden. Dieser ist nun im Stande auf unterschiedliche Füllgrade der Partikelmaterialoberfläche dynamisch zu reagieren. Grundsätzlich ist es über diesen Weg auch möglich, die Formkörper prozessoptimiert im Bauraum automatisiert zu platzieren. Somit entfällt der aufwendige und komplexe Arbeitsschritt einer manuellen Anordnung der zu erzeugenden Formkörper im virtuellen Bauraum. Hiermit sind große Zeit- und Kosteneinsparungen verbunden. So entfällt z.B. eine für die Bedienung von Sintermaschinen benötigte Schulung zur Bauteilplatzierung und Feinjustage. Nach dem Stand der Technik werden Formkörper, um die optimale Orientierung und Parametrierung zu gewährleisten, oft mehrmals erstellt, was in der Fachwelt als sog. "Ghost-Jobs" bekannt ist. Die diese mehrmaligen Vorversuch-Drucke entfallen, führt dies zu einer deutlichen Verringerung der Herstellkosten.

Außerdem kann die für die industrielle Fertigung wichtige geforderte Wiederholgenauigkeit erreicht werden, sodass eine engere Tolerierung der erzeugten Formkörper erfolgen kann. Somit wird also auch eine Steigerung der Qualität erreicht.

Soll eine größere Oberfläche bedient werden, lassen sich problemlos mehrere Strahlerfelder (sich überlappende Felder, die von einer Gruppe von Strahlern oder von verschiedenen Strahlereinheiten abgedeckt werden) staffeln. Durch Überlappung der Messbereiche von Thermographie-Kameras und Infrarot-Pyrometern lassen sich weiterhin Kalibrierdaten generieren und somit die Messgenauigkeit der verwendeten Instrumente verbessern, indem die gewonnenen Messdaten miteinander verglichen werden. Somit sind nahezu beliebige Baufeldgeometrien und -größen möglich, ohne einen erneuten aufwendigen und kostenintensiven Konstruktionsschritt zu enthalten.

Bezugszeichenliste

Fig. H1:

| H101 | Infrarotstrahler |
|------|------------------|
| H102 | Objektoberfläche |
| H103 | Temperatur der Infrarotstrahler in X-Richtung |
| H104 | Resultierende Temperaturverteilung auf der Objektoberfläche |
| H105 | Optimaler Temperaturbereich |
| H106 | Bereich entlang X-Richtung, der unterhalb der Optimal-Temperatur liegt |
| H107 | Infrarot-Pyrometer |
| H108 | Infrarotstrahler-Aggregat |

Fig. H2:

| H201 | Infrarotstrahler |
|------|------------------|
| H202 | Objektoberfläche |
| H203 | Errechnete benötigte Temperatur der Infrarotstrahler in X-Richtung |
| H204 | Resultierende Temperaturverteilung auf der Objektoberfläche |
| H205 | Diskretisierung der benötigten Oberflächentemperatur und Errechnung der Stellleistungen an den einzelnen Infrarotstrahlern |
| H206 | Infrarot-Pyrometer |
| H207 | Thermographie-Kamera |

Fig. H3:

| H301 | Strahler-Aggregat |
|------|-------------------|
| H302 | Thermographie-Kamera |
| H303 | Infrarotstrahler |

(fortgesetzt)

| H304 | Temperatur-Messfühler |
|------|----------------------|
| H305 | Infrarot-Pyrometer |

Fig. H4:

| H400 | Strahleraggregat |
|------|------------------|
| H401 - H406 | In einzelne Heizkreise zusammen gefasste Infrarotstrahler |

**Patentansprüche**

1. Strahlereinheit geeignet für eine 3D-Druckvorrichtung, wobei die Strahlereinheit eine Funktionseinheit ist, die elektromagnetische Strahlung eines bestimmten Spektrums emittiert und mehrere Strahler umfasst, wobei eine Untermenge von Strahlern zu einer Gruppe zusammengefasst ist, wobei jede Gruppe mindestens einen Strahler und mindestens einen Temperatursensor (H304) aufweist, welcher in mindestens einem der Strahler integriert ist, **dadurch gekennzeichnet, dass** der Temperatursensor (H304) in mindestens einem der Strahler integriert ist, um dessen Temperatur zu messen, und der Messwert einem Regelwerk zugeführt wird, um damit die Temperatur der Gruppe der Strahler zu regeln.

2. Strahlereinheit nach Anspruch 1, wobei an jedem Strahler oder jeder Gruppe von Strahlern eine Zieltemperatur eingestellt ist.

3. Strahlereinheit nach Anspruch 1 oder 2, wobei im Wesentlichen jede Gruppe von Strahlern in der Strahlereinheit auf eine andere Zieltemperatur eingestellt sein kann oder/und wobei die Strahlereinheit einen Regelkreis zur Zieltemperatureinstellung der Gruppe von Strahlern zur Zieltemperatureinstellung auf dem Baufeld aufweist, vorzugsweise in einem definierten Bereich auf dem Baufeld, wobei die Strahlereinheit einen Regelkreis zur Zieltemperatureinstellung jedes Strahlers aufweist und der Regelkreis zur Zieltemperatureinstellung einen Algorithmus verwendet.

4. Strahlereinheit nach einem der vorhergehenden Ansprüche, wobei die Strahlereinheit mindestens einen Temperatursensor zur Ermittlung der Zieltemperatur des Baufeldes aufweist, wobei der Temperatursensor eine Thermographie-Kamera, die auf das Baufeld gerichtet ist, und/oder mindestens ein Infrarot-Pyrometer ist.

5. Strahlereinheit nach Anspruch 4, wobei die Thermographie-Kamera für lokale Messaufnahmen und das Infrarot-Pyrometer der Kalibrierung der absoluten Temperaturwerte dient.

6. 3D-Druckvorrichtung, die eine Strahlereinheit nach einem der Ansprüche 1 bis 4 umfasst, wobei eine Zieltemperatur auf dem Baufeld durch eine Zieltemperatureinstellung in der Strahlereinheit in jedem Strahler oder jeder Gruppe von Strahlern einstellbar ist.

7. Verfahren zur Herstellung eines Formteils mittels Partikelmaterialauftrag und selektiver Verfestigung, wobei eine Strahlereinheit nach einem der Ansprüche 1 bis 4 in dem Verfahren verwendet wird, wobei das Verfahren ein 3D-High-Speed-Sintering-Verfahren oder ein 3D-Sinterverfahren oder ein Multi-Jet-Fusion-Verfahren ist.

8. Verfahren nach Anspruch 7, wobei die Zieltemperatur in den Strahlern im Randbereich auf einen höheren Wert im Vergleich zu den übrigen Bereichen der Strahlereinheit eingestellt wird.

9. Verfahren nach einem der Ansprüche 7 bis 8, wobei sich die Anordnung und/oder die Zieltemperatur der Strahler ergibt aus den physikalischen Gesetzen zur Wärmeübertragung und Berechnungen nach der Finite Elemente Methode unter Entwicklung eines eigenen Algorithmus.

**Claims**

1. An irradiation device suitable for a 3D printing device, wherein the irradiation device is a functional device that emits electromagnetic radiation of a specific spectrum and comprises a plurality of irradiation units, wherein a subset of irradiation units is combined into a group, wherein each group has at least one irradiation unit and at least one temperature sensor (H304) that is integrated into at least one of the irradiation units, **characterized in that** the temperature sensor (H304) is integrated into at least one of the irradiation units in order to measure its temperature, and the measured value is fed to a control system in order to control the temperature of the group of irradiation units.

2. The irradiation device according to claim 1, wherein a target temperature is set at each irradiation unit or group of irradiation units.

3. The irradiation device according to claim 1 or 2, wherein substantially each group of irradiation units in the irradiation device can be set to a different target temperature or/and wherein the irradiation device has a control loop for setting the target temperature of the group of irradiation units for setting the target temperature on the build field, preferably in a defined area on the build field, wherein the irradiation device has a control loop for setting the target temperature of each irradiation unit and the control loop for setting the target temperature uses an algorithm.

4. The irradiation device according to any one of the preceding claims, wherein the irradiation device comprises at least one temperature sensor for determining the target temperature of the build field, wherein the temperature sensor is a thermographic camera directed at the build field and/or at least one infrared pyrometer.

5. The irradiation device according to claim 4, wherein the thermographic camera is used for local measurement recordings and the infrared pyrometer is used for calibration of the absolute temperature values.

6. A 3D printer comprising an irradiation device according to any one of claims 1 to 4, wherein a target temperature on the build field is adjustable by a target temperature setting of each irradiation unit or each group of irradiation units in the irradiation device.

7. A method for producing a molding by means of particle material deposition and selective solidification, wherein an irradiation device according to any one of claims 1 to 4 is used, said method being a 3D high-speed sintering process or a 3D sintering process or a multi-jet fusion process.

8. The method according to claim 7, wherein the target temperature is set to a higher value in the irradiation units at the edges compared to the other areas of the irradiation device.

9. The method according to any one of claims 7 to 8, wherein the arrangement and/or target temperature of the irradiation units is derived from the physical laws of heat transfer and finite element method calculations with the development of a proprietary algorithm.

**Revendications**

1. Dispositif d'irradiation adapté à un dispositif d'impression 3D, le dispositif d'irradiation étant un dispositif fonctionnel qui émet un rayonnement électromagnétique d'un spectre déterminé et comprend plusieurs émetteurs, un sous-ensemble d'émetteurs étant regroupé en un groupe, chaque groupe comportant au moins un émetteur et au moins un capteur de température (H304) qui est intégré dans au moins un des émetteurs, **caractérisé en ce que** le capteur de température (H304) est intégré dans au moins un des émetteurs afin de mesurer sa température, et la valeur mesurée est transmise à un système de régulation afin de régler la température du groupe d'émetteurs.

2. Dispositif d'irradiation selon la revendication 1, dans lequel une température cible est réglée pour chaque émetteur ou chaque groupe d'émetteurs.

3. Dispositif d'irradiation selon la revendication 1 ou 2, dans lequel sensiblement chaque groupe d'émetteurs dans le dispositif d'irradiation peut être réglé sur une température cible différente ou/et dans lequel le dispositif d'irradiation comprend un circuit de régulation pour régler la température cible du groupe d'émetteurs afin de régler la température cible sur le champ de construction, de préférence dans une zone définie sur le champ de construction, le dispositif d'irradiation comportant un circuit de régulation pour le réglage de la température cible de chaque émetteur, et le circuit de régulation pour le réglage de la température cible utilisant un algorithme.

4. Dispositif d'irradiation selon l'une quelconque des revendications précédentes, le dispositif d'irradiation comportant au moins un capteur de température pour déterminer la température cible du champ de construction, le capteur de température étant une caméra thermographique dirigée vers le champ de construction et/ou au moins un pyromètre infrarouge.

5. Dispositif d'irradiation selon la revendication 4, la caméra thermographique servant à effectuer des mesures locales et le pyromètre infrarouge à calibrer les valeurs de température absolues.

6. Dispositif d'impression 3D qui comprend un dispositif d'irradiation selon l'une quelconque des revendications 1 à 4, une température cible sur le champ de construction pouvant être réglée dans le dispositif d'irradiation dans chaque émetteur ou chaque groupe groupe d'émetteurs grâce à un réglage de la température cible.

7. Procédé de fabrication d'une pièce moulée au moyen d'un dépôt de matière particulaire et d'une consolidation sélective, dans lequel un dispositif d'irradiation selon l'une quelconque des revendications 1 à 4 est utilisée dans le procédé, le procédé étant un procédé de frittage 3D à grande vitesse ou un procédé de frittage 3D ou un procédé de fusion à jets multiples.

8. Procédé selon la revendication 7, dans lequel la température cible dans les émetteurs situés dans la zone périphérique est réglée à une valeur plus élevée que dans les autres zones du dispositif d'irradiation.

9. Procédé selon l'une quelconque des revendications 7 à 8, dans lequel la disposition et/ou la température cible des émetteurs résultent des lois physiques relatives au transfert thermique et des calculs selon la méthode des éléments finis, avec développement d'un algorithme propre.

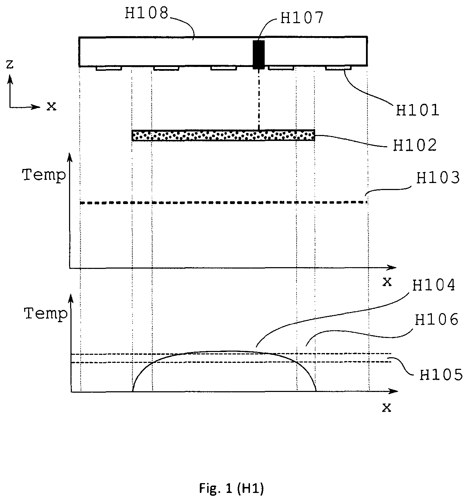

Fig. 1 (H1)

Fig. 2 (H2)

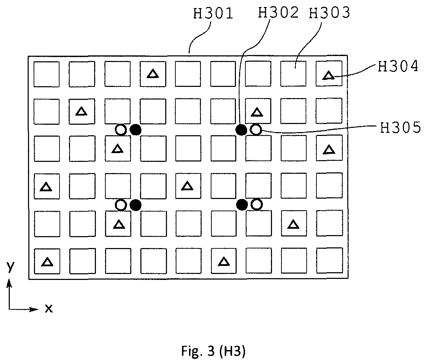

Fig. 3 (H3)

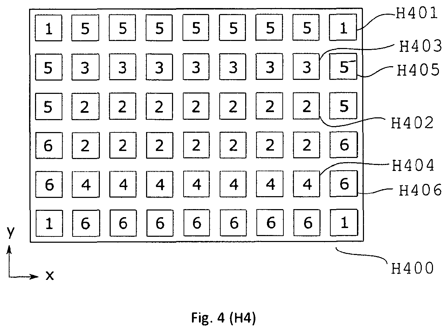

Fig. 4 (H4)

Pyrometer

$T_{abs}$ | Absolutwertkalibrierung

Temperaturverteilung

$T\_Array_{rel}$

IR-Kamera

$T\_Array_{abs}$

Algorithmus

Thermoelement

$T\_1_{ist}$

$T\_1_{soll}$ | PID-Regler | $P\_1$

Thermoelement

$T\_n_{ist}$

n

$T\_n_{soll}$ | PID-Regler | $P\_n$

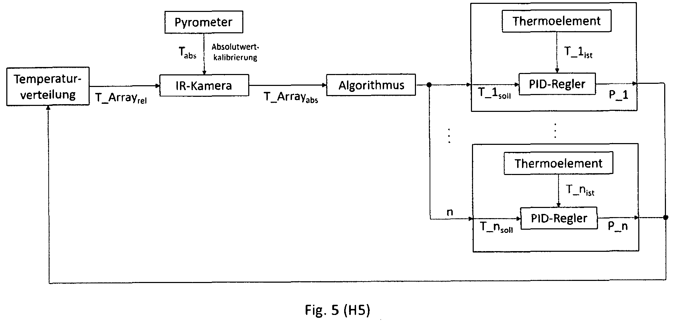

Fig. 5 (H5)

**IN DER BESCHREIBUNG AUFGEFÜHRTE DOKUMENTE**

**In der Beschreibung aufgeführte Patentdokumente**

- EP 0431924 B1
- US 2019176389 A1